# FASCICULE DE BREVET EUROPEEN

(11) **EP 3 613 185 B1**
(45) Date de publication et mention de la délivrance du brevet: **06.01.2021**
(21) Numéro de dépôt: 18715233.5
(22) Date de dépôt: 23.03.2018
(51) Int. Cl.: H04L 29/06

(54) **PROCÉDÉ ET DISPOSITIF DE CONTRÔLE DES TRANSMISSIONS ET RÉCEPTIONS DE TRAMES DANS UN RÉSEAU VIDÉO BIDIRECTIONNEL**
VERFAHREN UND VORRICHTUNG ZUR STEUERUNG DER ÜBERTRAGUNG UND DES EMPFANGS VON FRAMES IN EINEM BIDIREKTIONALEN VIDEONETZWERK
METHOD AND DEVICE FOR CONTROLLING TRANSMISSION AND RECEPTION OF FRAMES IN A BIDIRECTIONAL VIDEO NETWORK

(30) Priorité: 21.04.2017 FR 1753468
(43) Date de publication de la demande: 26.02.2020
(73) Titulaire: PSA Automobiles SA, 78300 Poissy (FR)
(72) Inventeur: BOISSERIE, Antony, 91320 Wissous (FR); POUSSARD, Julien, 75017 Paris (FR); CARDON, Gregory, 78340 Les Clayes sous Bois (FR)
(86) Numéro de dépôt international: PCT/FR2018/050719
(87) Numéro de publication internationale: WO 2018/193176

(56) Documents cités:
- WO-A1-2016/181053

## Description

L'invention concerne les réseaux de communication qui sont adaptés à la transmission bidirectionnelle de trames de données non vidéo et à la transmission unidirectionnelle de trames de données vidéo entre des organes maître et esclave, et plus précisément le contrôle de la transmission de trames de données non vidéo entre de tels organes.

Comme le sait l'homme de l'art, certains réseaux de communication du type précités, et notamment ceux dits « à signalisation différentielle à basse tension » (ou LVDS - « Low Voltage Differential Signaling »), comprennent un organe maître et au moins un organe esclave agencés de manière à s'échanger des trames de données non vidéo de façon bidirectionnelle, dans des créneaux (ou tranches) temporel(le)s (ou « slots ») qui sont défini(e)s par une table de programmation (ou « schedule table »), et des trames de données vidéo de façon unidirectionnelle.

L'utilisation d'une telle table de programmation permet avantageusement d'éviter que deux organes (ou nœuds) transmettent sensiblement simultanément des trames de données non vidéo, ce qui induirait leur perte. Par exemple, la perte d'une trame de données non vidéo de paramétrage d'écran entre un calculateur multimédia et un écran tactile d'un véhicule pourrait induire une absence de prise compte d'un paramétrage commandé par un passager et donc un effet indésirable sur l'écran tactile.

Mais une telle table de programmation ne permet pas d'éviter tous les problèmes. En effet, il arrive parfois qu'une partie des données non vidéo d'une trame n'ait pas encore été transmise par un organe à la fin du créneau temporel qui lui a été attribué par la table. Dans ce cas, cet organe achève sa transmission dans le créneau temporel suivant, alors qu'un autre organe a commencé à transmettre dans ce créneau temporel suivant. Il y a donc un risque de collision entre les deux trames, et donc un risque de perte de ces deux trames. Une telle situation peut par exemple survenir en présence d'un pic de charge de calcul (ou CPU) dû à une autre tâche que la transmission de trame, car cela peut engendrer des temps inter-octets plus importants que prévu dans la trame en cours de transmission (cela peut par exemple être le cas lors d'une communication téléphonique via une application Bluetooth). On connait par le document WO2016/181053 un dispositif dédié au contrôle de la transmission de trames par un organe maître ou esclave appartenant à un réseau de communication adapté à la transmission bidirectionnelle de trames de données non vidéo, dans des créneaux temporels définis par une table, et à la transmission unidirectionnelle de trames de données vidéo. Ce dispositif est agencé, lorsque débute un créneau temporel d'une première durée et dédié à la transmission d'au moins une trame de données non vidéo par l'organe maître ou esclave, pour déclencher une temporisation d'une seconde durée strictement inférieure à la première durée, et, lorsque la fin de cette temporisation survient alors que la trame de données non vidéo n'a pas été intégralement transmise, pour interdire à cet organe de terminer sa transmission.

Afin d'améliorer la situation il a été proposé, lorsque débute un créneau temporel dédié à la transmission d'une trame de données non vidéo par un organe maître ou esclave émetteur, de déclencher une temporisation d'une durée strictement inférieure à celle de ce créneau temporel, et, lorsque la fin de cette temporisation survient alors que la trame de données non vidéo n'a pas été intégralement transmise, d'interdire à cet organe émetteur de terminer sa transmission. Cependant, lorsque l'organe émetteur n'a pas le temps d'émettre sa trame dans le créneau temporel prédéfini, l'organe récepteur reçoit une trame tronquée mais ne sait pas qu'il ne recevra pas la fin de cette trame tronquée et donc reste dans l'attente de cette fin de trame. Par conséquent, lorsque l'organe émetteur lui transmet la trame suivante, l'organe récepteur interprète le début de cette nouvelle trame comme la suite de la trame tronquée précédente, et donc il n'a aucun moyen de se resynchroniser sur l'organe émetteur. Il en résulte une perte définitive de la communication LVDS bidirectionnelle jusqu'au prochain démarrage. Par exemple, dans un véhicule cela peut se traduire par une perte des commandes sur un écran tactile ou un déclenchement d'un mode dégradé ou encore une perte de communication avec les caméras d'un système d'aide à la conduite (par exemple de type ADAS (« Advanced Driver Assistance System »)).

L'invention a donc notamment pour but de remédier à l'inconvénient décrit ci-dessus.

Elle propose notamment à cet effet un procédé, d'une part, dédié au contrôle de la transmission de trames par des organes maître et esclave(s) appartenant à un réseau de communication adapté à la transmission bidirectionnelle de trames de données non vidéo, dans des créneaux temporels définis par une table, et à la transmission unidirectionnelle de trames de données vidéo, et, d'autre part, comprenant une étape dans laquelle, lorsque débute un créneau temporel d'une première durée et dédié à la transmission d'au moins une trame de données non vidéo par un organe dit émetteur, on déclenche une première temporisation d'une deuxième durée strictement inférieure à cette première durée, et, lorsqu'une fin de cette première temporisation survient alors que la trame de données non vidéo n'a pas été intégralement transmise, on interdit à l'organe émetteur de terminer sa transmission.

Ce procédé se caractérise par le fait que dans son étape, lorsqu'un organe dit récepteur reçoit la trame de données non vidéo dans le créneau temporel, on déclenche dans cet organe récepteur une seconde temporisation d'une troisième durée comprise entre les deuxième et première durée, et, lorsqu'une fin de cette seconde temporisation survient alors que la trame de données non vidéo n'a pas été intégralement reçue, on supprime dans l'organe récepteur les données reçues de cette trame de données non vidéo.

Ainsi, on est désormais sûr que l'organe récepteur est disponible pour une nouvelle réception dès le début du créneau temporel suivant.

Le procédé de contrôle selon l'invention peut comporter d'autres caractéristiques qui peuvent être prises séparément ou en combinaison, et notamment :
- dans l'étape, lorsque l'organe récepteur est un organe esclave, on peut déclencher la seconde temporisation d'une troisième durée au début de la réception de la trame de données non vidéo par cet organe esclave récepteur ;
- dans l'étape, lorsque l'organe récepteur est un organe maître, on peut déclencher la seconde temporisation d'une troisième durée au début du créneau temporel qui est utilisé par l'organe esclave émetteur pour transmettre la trame de données non vidéo ;
- la troisième durée peut, par exemple, être comprise entre 3,5 ms et 4,5 ms lorsque la première durée est égale à 5 ms. Par exemple, la troisième durée peut être égale à 4 ms.

L'invention propose également un dispositif de contrôle, destiné à contrôler la transmission de trames par un organe maître ou un organe esclave appartenant à un réseau de communication adapté à la transmission bidirectionnelle de trames de données non vidéo, dans des créneaux temporels définis par une table, et à la transmission unidirectionnelle de trames de données vidéo.

Ce dispositif se caractérise par le fait qu'il est agencé, lorsque son organe, alors dit récepteur, reçoit dans un créneau temporel d'une première durée une trame de données non vidéo transmise par un autre organe dit émetteur dans une deuxième durée commençant en même temps que la première durée et strictement inférieure à cette dernière, pour déclencher une temporisation d'une troisième durée comprise entre les deuxième et première durée, et, lorsqu'une fin de cette temporisation survient alors que la trame de données non vidéo n'a pas été intégralement reçue, pour ordonner la suppression dans son organe récepteur des données reçues de cette trame de données non vidéo.

L'invention propose également un organe (maître ou esclave), propre à être connecté à un réseau de communication adapté à la transmission bidirectionnelle de trames de données non vidéo, dans des créneaux temporels définis par une table, et à la transmission unidirectionnelle de trames de données vidéo, et comprenant un dispositif de contrôle du type de celui présenté ci-avant.

L'invention propose également un véhicule, éventuellement de type automobile, et comprenant, d'une part, un réseau de communication adapté à la transmission bidirectionnelle de trames de données non vidéo, dans des créneaux temporels définis par une table, et à la transmission unidirectionnelle de trames de données vidéo, et, d'autre part, au moins deux organes du type de celui présenté ci-avant et connectés au réseau de communication.

L'invention est particulièrement bien adaptée, bien que non limitativement, au cas où le réseau de communication est de type LVDS.

D'autres caractéristiques et avantages de l'invention apparaîtront à l'examen de la description détaillée ci-après, et des dessins annexés, sur lesquels :
- la figure 1 illustre schématiquement et fonctionnellement un véhicule comprenant un réseau de communication auquel sont connectés des organes maître et esclaves équipés chacun d'un dispositif de contrôle selon l'invention, et
- la figure 2 illustre schématiquement un premier exemple de chronogramme matérialisant une trame d'écriture (T_{E}) dont une partie (ptₙₜ) n'a pas été transmise à la fin de la première temporisation associée à son créneau temporel.

L'invention a notamment pour but de proposer un procédé de contrôle, et un dispositif de contrôle DC associé, destinés à permettre le contrôle de la transmission de trames par un organe maître OM et au moins un organe esclave OEj appartenant à un réseau de communication RC adapté à la transmission bidirectionnelle de trames de données non vidéo, dans des créneaux temporels définis par une table (de programmation), et à la transmission unidirectionnelle de trames de données vidéo.

Dans ce qui suit, on considère, à titre d'exemple non limitatif, que le réseau de communication RC est installé dans un véhicule automobile V, comme par exemple une voiture. Mais l'invention n'est pas limitée à cette application. Elle concerne en effet tout système, installation ou appareil pouvant comprendre au moins un réseau de communication adapté à la transmission bidirectionnelle de trames de données non vidéo et à la transmission unidirectionnelle de trames de données vidéo. Elle concerne donc notamment les véhicules, qu'ils soient de type terrestre, maritime (ou fluvial), ou aérien, les installations, éventuellement de type industriel, et les bâtiments.

Par ailleurs, on considère dans ce qui suit, à titre d'exemple non limitatif, que le réseau de communication RC est de type LVDS (« Low Voltage Differential Signaling »). Mais l'invention n'est pas limitée à ce type de réseau de communication. D'une manière générale, l'invention concerne tout réseau de communication adapté à la transmission bidirectionnelle de trames de données non vidéo et à la transmission unidirectionnelle de trames de données vidéo.

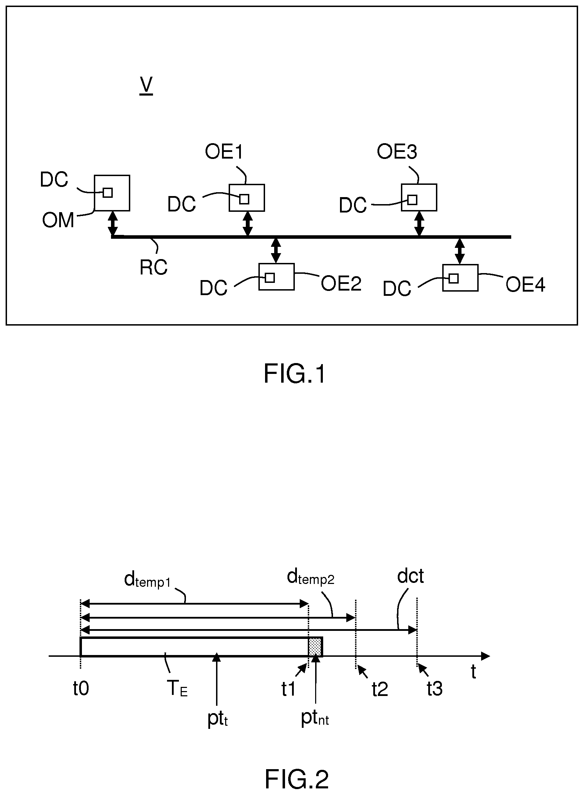

On a schématiquement représenté sur la figure 1 un véhicule comprenant un exemple non limitatif de réseau (de communication) RC. Dans cet exemple, le réseau RC (de type LVDS) comprend un bus auquel sont connectés un organe (ou nœud) maître OM et quatre organes (ou nœuds) esclaves OE1 à OE4 (j = 1 à 4). Mais le nombre d'organes esclaves OEj peut prendre n'importe quelle valeur supérieure ou égale à un (1).

L'organe maître OM et les organes esclaves OEj peuvent être de tout type, dès lors qu'ils sont impliqués dans l'acquisition ou l'utilisation de données vidéo. Par exemple, dans le cas d'une voiture l'organe maître OM peut être un calculateur multimédia ou un superviseur ADAS et un organe esclave OEj peut être un écran tactile ou une caméra acquérant des images de l'environnement extérieur.

Au sein du réseau RC, l'organe maître OM et les organes esclaves OEj sont autorisés à transmettre des trames de données non vidéo dans des créneaux temporels (ou slots) ct qui sont prédéfinis dans une table (de programmation), connue de chacun d'entre eux.

Il est rappelé que dans un réseau LVDS l'organe maître OM peut transmettre soit des trames de données non vidéo dites d'écriture (ou « write frames ») T_{E}, soit des trames de données non vidéo dites d'entête (ou « header frames ») T_{H}, tandis que chaque organe esclave OEj peut transmettre des trames de données non vidéo dites de lecture (ou « read frames ») T_{L} en réponse respectivement à des trames de données non vidéo d'entête T_{H}. Par ailleurs, une trame d'entête T_{H} et la trame de lecture T_{L} associée sont transmises dans un même créneau temporel ct défini par la table.

Une trame d'écriture T_{E} est destinée à transmettre des données non vidéo à un organe esclave OEj et contient les champs suivants, toujours transmis dans le même ordre :
- un champ de synchronisation (SYNC), indiquant le début de la trame,
- un champ (DEV ADDR), indiquant à quel composant (sérialiseur, désérialiseur ou microcontrôleur esclave) la trame est adressée,
- un identifiant (ID), permettant à l'application de l'organe esclave OEj récepteur de savoir comment décoder le champ de données fonctionnelles,
- une longueur de trame (DLC), indiquant la taille de la trame ou la taille du champ de données fonctionnelles (en octet),
- le champ de données fonctionnelles (Di), contenant des données de commandes (par exemple le réglage d'un écran),
- une somme de contrôle (CRC), pour permettre à l'organe esclave OEj récepteur de vérifier que la trame reçue n'a pas été altérée au cours de la transmission.

Une trame d'entête T_{H} contient les champs suivants, toujours transmis dans le même ordre :
- un champ de synchronisation (SYNC), indiquant le début de la trame,
- un champ (DEV ADDR), indiquant à quel composant (sérialiseur, désérialiseur ou microcontrôleur esclave) la trame est adressée,
- un identifiant (ID), permettant à l'application de l'organe esclave OEj récepteur de savoir comment décoder le champ de données fonctionnelles,
- une longueur de trame (DLC), indiquant la taille de la trame demandée (en octet).

Une trame de lecture T_{L} contient les champs suivants, toujours transmis dans le même ordre :
- un premier champ (ACK), indiquant le début de la trame,
- un champ de données fonctionnelles (Di), contenant des données de commandes (par exemple des données générées par un écran tactile indiquant quelle partie de l'écran est touchée par un utilisateur),
- une somme de contrôle (CRC), pour permettre à l'organe maître OM récepteur de vérifier que la trame reçue n'a pas été altérée au cours de la transmission.

Le procédé (de contrôle), selon l'invention, comprend une étape qui est effectuée chaque fois que débute un créneau temporel ct, ayant une première durée dct et dédié à la transmission par un organe OM ou OEj, alors dit émetteur, d'au moins une trame de données non vidéo.

Dans ce cas, au début d'un créneau temporel ct on déclenche dans l'organe émetteur OM ou OEj une première temporisation temp1 d'une deuxième durée dₜₑₘₚ₁ strictement inférieure à la première durée dct (du créneau temporel ct considéré), et à la fin de cette première temporisation temp1 si la trame de données non vidéo n'a pas été intégralement transmise, on interdit à l'organe émetteur OM ou OEj, qui transmet cette trame de données non vidéo, de terminer sa transmission. On comprendra que cette interruption de la transmission de la fin ptₙₜ de la trame (à l'expiration de la deuxième durée dₜₑₘₚ₁ de la première temporisation temp1) est destinée à éviter une collision dans le créneau temporel ct suivant entre cette fin ptₙₜ de la trame et une trame suivante, afin que cette dernière ne soit pas également perdue.

De son côté l'organe récepteur OEj ou OM a reçu une trame tronquée ptt et donc reste dans l'attente de la fin ptₙₜ de cette trame. Pour éviter que l'organe récepteur OEj ou OM interprète le début de la trame suivante, transmise par l'organe émetteur OM ou OEj, comme la suite de la trame tronquée ptt précédente, l'invention propose que dans l'étape du procédé on déclenche dans le créneau temporel ct, dans cet organe récepteur OEj ou OM, une seconde temporisation temp2 ayant une troisième durée dₜₑₘₚ₂ comprise entre les deuxième dₜₑₘₚ₁ et première dct durées. Puis, si la fin de cette seconde temporisation temp2 survient alors que la trame de données non vidéo n'a pas été intégralement reçue par l'organe récepteur OEj ou OM, on supprime dans ce dernier (OEj ou OM) les données ptt de cette trame de données non vidéo qu'il a reçues et qui sont incomplètes.

Ainsi, lorsque l'organe émetteur OM ou OEj transmet la trame suivante dans le créneau temporel ct suivant à l'organe récepteur OEj ou OM, ce dernier (OEj ou OM) interprète les premières données reçues dans ce créneau temporel ct suivant comme le début d'une nouvelle trame et non pas comme la suite de la trame tronquée précédente. Par conséquent, l'organe récepteur OEj ou OM ne risque pas de se désynchroniser de l'organe émetteur OM ou OEj, et donc on ne risque pas de perdre la communication LVDS bidirectionnelle. De plus, on est désormais sûr que l'organe récepteur est disponible pour une nouvelle réception dès le début du créneau temporel ct suivant.

On notera que le déclenchement de la seconde temporisation temp2 ne se fait pas obligatoirement de la même façon dans un organe esclave récepteur OEj et dans un organe maître récepteur OM.

En effet, dans l'étape du procédé, lorsque l'organe récepteur est un organe esclave OEj, on peut déclencher la seconde temporisation temp2 (d'une troisième durée dₜₑₘₚ₂) au début de la réception de la trame de données non vidéo par cet organe esclave récepteur OEj.

En revanche, dans l'étape du procédé, lorsque l'organe récepteur est un organe maître OM, on peut déclencher la seconde temporisation temp2 (d'une troisième durée dₜₑₘₚ₂) au début du créneau temporel ct qui est utilisé par l'organe esclave émetteur OEj pour transmettre la trame de données non vidéo.

Cette très légère différence sur les instants de déclenchement de la seconde temporisation temp2 résulte du fait que l'organe maître OM sait, de par son contrôle de la table et de la synchronisation du réseau RC, quand débute chaque créneau temporel ct (le début lui sert alors de référence de déclenchement), alors que l'organe esclave OEj n'a comme référence de déclenchement que l'instant où il commence à recevoir le premier octet d'une trame.

Par exemple, la troisième durée dₜₑₘₚ₂ peut être comprise entre 3,5 ms et 4,5 ms lorsque la première durée dct est égale à 5 ms. Dans ce cas, la troisième durée dₜₑₘₚ₂ peut, par exemple, être choisie égale à 4 ms.

D'une manière générale la troisième durée dₜₑₘₚ₂ est choisie en fonction de la précision des horloges internes qui équipent les organes OM et OEj. Cette troisième durée dₜₑₘₚ₂ est donc choisie la plus grande possible par rapport à la première durée dct, en se réservant une marge au moins pour les dérives d'horloge et éventuellement la fin de transmission d'un dernier octet de la trame.

La mise en œuvre du procédé peut être réalisée par un dispositif de contrôle DC. Comme illustré non limitativement sur la figure 1 chaque organe OM, OEj peut être équipé d'un tel dispositif de contrôle DC. Mais dans une variante de réalisation non illustrée chaque dispositif de contrôle DC pourrait être couplé à un organe maître OM ou esclave OEj.

Notamment, chaque dispositif de contrôle DC est chargé, lorsque son organe est émetteur, de déclencher la première temporisation temp1 au début de chaque créneau temporel ct pendant lequel il doit transmettre une trame, et de vérifier si cette trame a été intégralement transmise lorsqu'expire la première temporisation temp1 associée (à la fin de la deuxième durée dₜₑₘₚ₁). Si cette trame n'a pas été intégralement transmise, le dispositif de contrôle DC interdit à son organe émetteur de terminer sa transmission. Chaque dispositif de contrôle DC est également chargé, lorsque son organe est récepteur, et donc reçoit dans un créneau temporel ct une trame de données non vidéo transmise par un organe émetteur, de déclencher la seconde temporisation temp2 (d'une troisième durée dₜₑₘₚ₂ comprise entre les deuxième dₜₑₘₚ₁ et première dct durées), et, lorsque la fin de cette seconde temporisation temp2 survient alors que la trame de données non vidéo n'a pas été intégralement reçue, d'ordonner la suppression dans son organe récepteur des données reçues ptt de cette trame de données non vidéo.

Chaque dispositif de contrôle DC peut être réalisé sous la forme de modules logiciels (ou informatiques ou « software »), ou bien de circuits électroniques (ou « hardware »), ou encore d'une combinaison de circuits électroniques et de modules logiciels. On notera que chaque dispositif de contrôle DC peut être considéré comme un automate.

On a schématiquement illustré sur la figure 2 un exemple de chronogramme permettant de faciliter la compréhension de l'invention.

A l'instant t0 un organe émetteur, par exemple l'organe maître OM, commence à transmettre une trame d'écriture T_{E} dans le créneau temporel ct qui est défini dans la table qu'il stocke, et donc son dispositif de contrôle DC déclenche la première temporisation temp1. Par conséquent, ce créneau temporel ct et donc la première temporisation temp1 associée (et de durée dₜₑₘₚ₁) débutent à ce même instant t0. A compter de cet instant t0 l'organe maître émetteur OM dispose d'une durée dₜₑₘₚ₁ pour transmettre cette trame d'écriture T_{E} dans le créneau temporel ct à un organe esclave récepteur, par exemple OE1. La fin de cette durée dₜₑₘₚ₁ expire à un instant t1 (avec t1 = t0 + dₜₑₘₚ₁).

Dès que l'organe esclave récepteur OE1 commence à recevoir la trame d'écriture T_{E} dans ce même créneau temporel ct, son dispositif de contrôle DC déclenche la seconde temporisation temp2 de durée dₜₑₘₚ₂.

Dans cet exemple, à l'instant t1 seule une partie ptt de la trame d'écriture T_{E} a été transmise et reçue par l'organe esclave récepteur OE1. Par conséquent, le dispositif de contrôle DC de l'organe maître émetteur OM interdit à ce dernier (OM) de terminer sa transmission (la partie ptₙₜ n'est donc pas transmise à l'organe esclave récepteur OE1). La partie transmise ptt de la trame d'écriture T_{E} est matérialisée en blanc et la partie non transmise ptₙₜ de la trame d'écriture T_{E} est matérialisée en gris.

A un instant t2, la durée dₜₑₘₚ₂ de la temporisation temp2 se termine dans l'organe esclave récepteur OE1 (t2 = t0 + dₜₑₘₚ₂). L'organe esclave récepteur OE1 n'ayant pas reçu l'intégralité de la trame d'écriture T_{E} à cet instant t2 (dont la longueur est défini par le champ de longueur de l'entête de cette trame d'écriture T_{E}), son dispositif de contrôle DC lui ordonne de supprimer de sa mémoire de réception les données de la partie transmise ptt qu'il vient de recevoir. La trame d'écriture T_{E} est donc perdue, mais la synchronisation et la communication avec l'organe maître OM sont préservées.

L'invention permet d'assurer un déterminisme et une robustesse des transmissions entre deux organes (ou nœuds) du réseau de communication, en se prémunissant des éventuels problèmes de collision et en garantissant que l'organe récepteur sera toujours disponible pour une nouvelle réception dès le début du créneau temporel suivant.

## Revendications

1. Procédé de contrôle de la transmission de trames par des organes maître (OM) et esclave(s) (OEj) appartenant à un réseau de communication (RC) adapté à la transmission bidirectionnelle de trames de données non vidéo, dans des créneaux temporels définis par une table, et à la transmission unidirectionnelle de trames de données vidéo, ledit procédé comprenant une étape dans laquelle, lorsque débute un créneau temporel d'une première durée et dédié à la transmission d'au moins une trame de données non vidéo par un organe (OM, OEj) dit émetteur, on déclenche une première temporisation d'une deuxième durée strictement inférieure à cette première durée, et, lorsqu'une fin de cette première temporisation survient alors que la trame de données non vidéo n'a pas été intégralement transmise, on interdit audit organe émetteur (OM, OEj) de terminer sa transmission, **caractérisé en ce que** dans ladite étape, lorsqu'un organe (OM, OEj) dit récepteur reçoit ladite trame de données non vidéo dans ledit créneau temporel, on déclenche dans ledit organe récepteur (OM, OEj) une seconde temporisation d'une troisième durée comprise entre lesdites deuxième et première durée, et, lorsqu'une fin de ladite seconde temporisation survient alors que ladite trame de données non vidéo n'a pas été intégralement reçue, on supprime dans ledit organe récepteur (OM, OEj) les données reçues de cette trame de données non vidéo.

2. Procédé selon la revendication 1, **caractérisé en ce que** dans ladite étape, lorsque ledit organe récepteur (OM, OEj) est un organe esclave (OEj), on déclenche ladite seconde temporisation d'une troisième durée au début de la réception de ladite trame de données non vidéo par cet organe esclave récepteur (OEj).

3. Procédé selon la revendication 1 ou 2, **caractérisé en ce que** dans ladite étape, lorsque ledit organe récepteur (OM, OEj) est un organe maître (OM), on déclenche ladite seconde temporisation d'une troisième durée au début dudit créneau temporel utilisé par ledit organe esclave émetteur (OEj) pour transmettre ladite trame de données non vidéo.

4. Procédé selon l'une des revendications 1 à 3, **caractérisé en ce que** ladite troisième durée est comprise entre 3,5 ms et 4,5 ms lorsque ladite première durée est égale à 5 ms.

5. Dispositif (DC) pour contrôler la transmission de trames par un organe maître (OM) ou un organe esclave (OEj) appartenant à un réseau de communication (RC) adapté à la transmission bidirectionnelle de trames de données non vidéo, dans des créneaux temporels définis par une table, et à la transmission unidirectionnelle de trames de données vidéo, **caractérisé en ce qu'**il est agencé, lorsque ledit organe (OM, OEj), alors dit récepteur, reçoit dans un créneau temporel d'une première durée une trame de données non vidéo transmise par un organe (OEj, OM) dit émetteur dans une deuxième durée commençant en même temps que ladite première durée et strictement inférieure à ladite première durée, pour déclencher une temporisation d'une troisième durée comprise entre lesdites deuxième et première durée, et, lorsqu'une fin de ladite temporisation survient alors que ladite trame de données non vidéo n'a pas été intégralement reçue, pour ordonner la suppression dans ledit organe récepteur (OM, OEj) des données reçues de cette trame de données non vidéo.

6. Organe (OM, OEj) propre à être connecté à un réseau de communication (RC) adapté à la transmission bidirectionnelle de trames de données non vidéo, dans des créneaux temporels définis par une table, et à la transmission unidirectionnelle de trames de données vidéo, **caractérisé en ce qu'**il comprend un dispositif de contrôle (DC) selon la revendication 5.

7. Véhicule (V) comprenant un réseau de communication (RC) adapté à la transmission bidirectionnelle de trames de données non vidéo, dans des créneaux temporels définis par une table, et à la transmission unidirectionnelle de trames de données vidéo, **caractérisé en ce qu'**il comprend au moins deux organes (OM, OEj) selon la revendication 6, connectés audit réseau de communication (RC).

8. Véhicule selon la revendication 7, **caractérisé en ce que** ledit réseau de communication (RC) est de type dit à signalisation différentielle à basse tension.

9. Véhicule selon la revendication 7 ou 8, **caractérisé en ce qu'**il est de type automobile.

## Patentansprüche

1. Ein Verfahren zum Steuern der Übertragung von Rahmen durch Master-(OM) und Slave- (OEj) Mitglieder, die zu einem Kommunikationsnetzwerk (RC) gehören, das für die bidirektionale Übertragung von Nicht-Videodatenrahmen in durch eine Tabelle definierten Zeitschlitzen und für die unidirektionale Übertragung von Videodatenrahmen geeignet ist, wobei das Verfahren einen Schritt umfasst, bei dem, wenn ein Zeitschlitz mit einer ersten Dauer, der für die Übertragung mindestens eines Rahmens von Nicht-Videodaten durch einen so genannten Sender (OM, OEj) bestimmt ist, beginnt, eine erste Zeitverzögerung mit einer zweiten Dauer ausgelöst wird, die strikt kürzer als diese erste Dauer ist, und wenn ein Ende dieser ersten Zeitverzögerung eintritt, wenn der Nicht-Videodatenrahmen nicht vollständig übertragen worden ist, das Sendeelement (OM, OEj) daran gehindert wird, seine Übertragung zu beenden, **dadurch gekennzeichnet, dass** in diesem Schritt, wenn ein Element (OM, OEj), das Empfänger genannt wird, den Nicht-Videodatenrahmen in dem Zeitschlitz empfängt, eine zweite Zeitverzögerung einer dritten Dauer zwischen der zweiten und der ersten Dauer in der Empfangsvorrichtung (OM, OEj) ausgelöst wird, und wenn ein Ende der zweiten Zeitverzögerung eintritt, wenn der Nicht-Videodatenrahmen nicht vollständig empfangen wurde, werden die in der Empfangsvorrichtung (OM, OEj) empfangenen Daten aus diesem Nicht-Videodatenrahmen gelöscht.

2. Verfahren nach Anspruch 1, **dadurch gekennzeichnet, dass** in diesem Schritt, wenn die Empfängereinheit (OM, OEj) eine Slave-Einheit (OEj) ist, die zweite Zeitverzögerung einer dritten Dauer zu Beginn des Empfangs des Nicht-Videodatenrahmens durch diese Slave-Empfängereinheit (OEj) ausgelöst wird.

3. Verfahren nach Anspruch 1 oder 2, **dadurch gekennzeichnet, dass** in diesem Schritt, wenn die Empfängereinheit (OM, OEj) eine Master-Einheit (OM) ist, die zweite Zeitverzögerung einer dritten Dauer zu Beginn des Zeitschlitzes ausgelöst wird, der von der sendenden Slave-Einheit (OEj) zur Übertragung des Nicht-Videodatenrahmens verwendet wird.

4. Verfahren nach einem der Ansprüche 1 bis 3, **dadurch gekennzeichnet, dass** die dritte Zeitdauer zwischen 3,5 ms und 4,5 ms liegt, wenn die erste Zeitdauer gleich 5 ms ist.

5. Vorrichtung (DC) zur Steuerung der Übertragung von Rahmen durch ein Master-Mitglied (OM) oder ein Slave-Mitglied (OEj), die zu einem Kommunikationsnetz (RC) gehören, das für die bidirektionale Übertragung von Nicht-Video-Datenrahmen in durch eine Tabelle definierten Zeitschlitzen geeignet ist, und zur unidirektionalen Übertragung von Videodaten-Frames, **dadurch gekennzeichnet, dass** sie eingerichtet ist, wenn die Vorrichtung (OM, OEj), die dann Empfänger genannt wird, in einem Zeitschlitz einer ersten Dauer ein von einer Vorrichtung (OEj) übertragenes Nicht-Videodaten-Frame empfängt, OM) den Sender in einer zweiten Zeitperiode, die zur gleichen Zeit wie die erste Zeitperiode und strikt kürzer als die erste Zeitperiode beginnt, zum Auslösen einer Zeitverzögerung einer dritten Zeitperiode, die zwischen der zweiten und der ersten Zeitperiode liegt, und, wenn ein Ende der Zeitverzögerung eintritt, während der Nicht-Videodatenrahmen nicht vollständig empfangen wurde, zum Anordnen der Löschung der von diesem Nicht-Videodatenrahmen empfangenen Daten in dem Empfangsorgan (OM, OEj).

6. Vorrichtung (OM, OEj), die geeignet ist, an ein Kommunikationsnetz (RC) angeschlossen zu werden, das für die bidirektionale Übertragung von Nicht-Videodatenrahmen in durch eine Tabelle definierten Zeitschlitzen und für die unidirektionale Übertragung von Videodatenrahmen geeignet ist, **dadurch gekennzeichnet, dass** sie eine Steuervorrichtung (DC) nach Anspruch 5 umfasst.

7. Fahrzeug (V) mit einem Kommunikationsnetz (RC), das für die bidirektionale Übertragung von Nicht-Videodatenrahmen in durch eine Tabelle definierten Zeitschlitzen und für die unidirektionale Übertragung von Videodatenrahmen geeignet ist, **dadurch gekennzeichnet, dass** es mindestens zwei Elemente (OM, OEj) nach Anspruch 6 umfasst, die mit dem Kommunikationsnetz (RC) verbunden sind.

8. Fahrzeug nach Anspruch 7, **dadurch gekennzeichnet, dass** das Kommunikationsnetzwerk (RC) vom sogenannten Niederspannungs-Differentialsignalisierungstyp ist.

9. Fahrzeug nach Anspruch 7 oder 8, **dadurch gekennzeichnet, dass** es vom Automobiltyp ist.

## Claims

1. Method for controlling the transmission of frames by master (OM) and slave (OEj) members belonging to a communication network (RC) adapted to the bidirectional transmission of non-video data frames, in time slots defined by a table, and to the unidirectional transmission of video data frames, said method comprising a step in which, when a time slot of a first duration and dedicated to the transmission of at least one frame of non-video data by a so-called transmitter (OM, OEj) begins, a first time delay of a second duration strictly less than this first duration is triggered, and, when an end of this first time delay occurs when the non-video data frame has not been completely transmitted, said transmitting organ (OM, OEj) is prevented from completing its transmission, **characterised in that** in said step, when a said receiving organ (OM, OEj) receives said non-video data frame in said time slot, a second time delay of a third duration between said second and first duration is triggered in said receiving device (OM, OEj), and, when an end of said second time delay occurs when said non-video data frame has not been completely received, the data received from this non-video data frame is deleted in said receiving device (OM, OEj).

2. Method according to claim 1, **characterised in that** in said step, when said receiver unit (OM, OEj) is a slave unit (OEj), said second delay of a third duration is triggered at the beginning of the reception of said non-video data frame by said slave receiver unit (OEj).

3. Method according to claim 1 or 2, **characterised in that** in said step, when said receiver unit (OM, OEj) is a master unit (OM), said second delay of a third duration is triggered at the beginning of said time slot used by said transmitting slave unit (OEj) to transmit said non-video data frame.

4. Method according to one of claims 1 to 3, **characterised in that** said third time duration is between 3.5 ms and 4.5 ms when said first time duration is equal to 5 ms.

5. Device (DC) for controlling the transmission of frames by a master device (OM) or a slave device (OEj) belonging to a communication network (RC) suitable for the bidirectional transmission of non-video data frames in time slots defined by a table, and the unidirectional transmission of video data frames, **characterised in that** it is arranged, when the said organ (OM, OEj), then called receiver, receives in a time slot of a first duration a non-video data frame transmitted by an organ (OEj), OM) said transmitter in a second time period beginning at the same time as said first time period and strictly less than said first time period, to trigger a time delay of a third time period comprised between said second and first time periods, and, when an end of said time delay occurs when said non-video data frame has not been completely received, to order the deletion in said receiving organ (OM, OEj) of the data received from this non-video data frame.

6. Device (OM, OEj) suitable for being connected to a communication network (RC) adapted for the bidirectional transmission of non-video data frames, in time slots defined by a table, and for the unidirectional transmission of video data frames, **characterised in that** it comprises a control device (DC) according to claim 5.

7. Vehicle (V) comprising a communication network (RC) adapted for the bidirectional transmission of non-video data frames, in time slots defined by a table, and for the unidirectional transmission of video data frames, **characterised in that** it comprises at least two devices (OM, OEj) according to claim 6, connected to said communication network (RC).

8. A vehicle according to claim 7, **characterised in that** said communication network (RC) is of the so-called low-voltage differential signalling type.

9. A vehicle according to claim 7 or 8, **characterised in that** it is of the automotive type.
